(19) Europäisches Patentamt
European Patent Office
Office européen des brevets

(11) **EP 4 645 817 A1**

(12) **EUROPEAN PATENT APPLICATION**
published in accordance with Art. 153(4) EPC

(43) Date of publication:
**05.11.2025  Bulletin 2025/45**

(21) Application number: **22970126.3**

(22) Date of filing: **27.12.2022**

(51) International Patent Classification (IPC):
**H04L 47/28** (2022.01)     **H04L 12/28** (2006.01)

(52) Cooperative Patent Classification (CPC):
**H04L 12/28; H04L 47/28**

(86) International application number:
**PCT/JP2022/048429**

(87) International publication number:
**WO 2024/142338 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nissan Motor Co., Ltd.
Kanagawa 221-0023 (JP)**

(72) Inventor: **KONISHI Kenichi
Atsugi-shi, Kanagawa 243-0123 (JP)**

(74) Representative: **Global IP Europe
Patentanwaltskanzlei
Pfarrstraße 14
80538 München (DE)**

(54) **DATA TRANSFER METHOD AND ONBOARD RELAY DEVICE**

(57)    An in-vehicle relay device: when receiving a specific request from an external tool connected to a vehicle, transfers the specific request to a plurality of electronic controllers that are transmission targets of the specific request; sets a communication cycle based on a number of the plurality of electronic controllers and a load of a communication line; and when receiving response data to the specific request from the plurality of electronic controllers, transfers the response data received within a prescribed time to the external tool for each communication cycle.

FIG. 6

**Description**

TECHNICAL FIELD

The present invention relates to a data transfer method and an in-vehicle relay device.

BACKGROUND ART

Patent Literature 1 discloses a conventionally known vehicle controller for controlling equipment by communicating with an ECU mounted on a vehicle via a communication line. In the vehicle controller disclosed in Patent Literature 1, when response data is transmitted in response to a specific request, a transmission interval of a response data frame has been determined according to the degree of congestion of the communication line.

CITATION LIST

PATENT LITERATURE

Patent Literature 1: JP 2005-47488 A

SUMMARY OF INVENTION

PROBLEMS TO BE SOLVED BY INVENTION

However, in the conventional known vehicle controller described above, the transmission interval has been determined according to the degree of congestion of the communication line. Therefore, there has been a problem that a load of the communication line can be reduced only after the communication line is actually congested.
Therefore, the present invention has been devised in view of the above described problem, and an object of the present invention is to provide an in-vehicle relay device and a data transfer method performed thereby which can prevent a communication line load from increasing in advance by expecting that the communication line load will increase.

SOLUTION TO SOLVE PROBLEMS

In order to solve the problem above, an in-vehicle relay device and a data transfer method according to an embodiment of the present invention, when receiving a specific request from an external tool connected to a vehicle, transfer the specific request to a plurality of electronic controllers that are transmission targets of the specific request. Then, the an in-vehicle relay device and a data transfer method set a communication cycle based on a number of the plurality of electronic controllers and a load of a communication line, and when receiving response data to the specific request from the plurality of electronic controllers, transfer the response data received within a prescribed time to the external tool for each communication cycle.

EFFECTS OF INVENTION

According to the present invention, it is possible to prevent a communication line load from increasing in advance by expecting that the communication line load will increase.

BRIEF DESCRIPTION OF DRAWINGS

[FIG. 1] FIG. 1 is a block diagram illustrating a configuration of an in-vehicle control system including an in-vehicle relay device according to an embodiment.
[FIG. 2] FIG. 2 is a communication sequence diagram for explaining OBD communication by the in-vehicle control system.
[FIG. 3] FIG. 3 is a flowchart illustrating a processing procedure of diagnostic mode switching processing by the in-vehicle relay device according to an embodiment.
[FIG. 4] FIG. 4 is a flowchart illustrating a processing procedure of first frame transfer processing by the in-vehicle relay device according to an embodiment.
[FIG. 5] FIG. 5 is a flowchart illustrating a processing procedure of response frame transfer processing by the in-vehicle relay device according to an embodiment.

[FIG. 6] FIG. 6 is a diagram for explaining the response frame transfer processing by the in-vehicle relay device according to an embodiment.

[FIG. 7] FIG. 7 is a diagram for explaining the response frame transfer processing by the in-vehicle relay device according to an embodiment.

DESCRIPTION OF EMBODIMENTS

An embodiment to which the present invention is applied will be described below with reference to the drawings. In the descriptions of the drawings, the same parts are denoted by the same reference numerals and a detailed description thereof will be omitted.

[Configuration of in-vehicle control system]

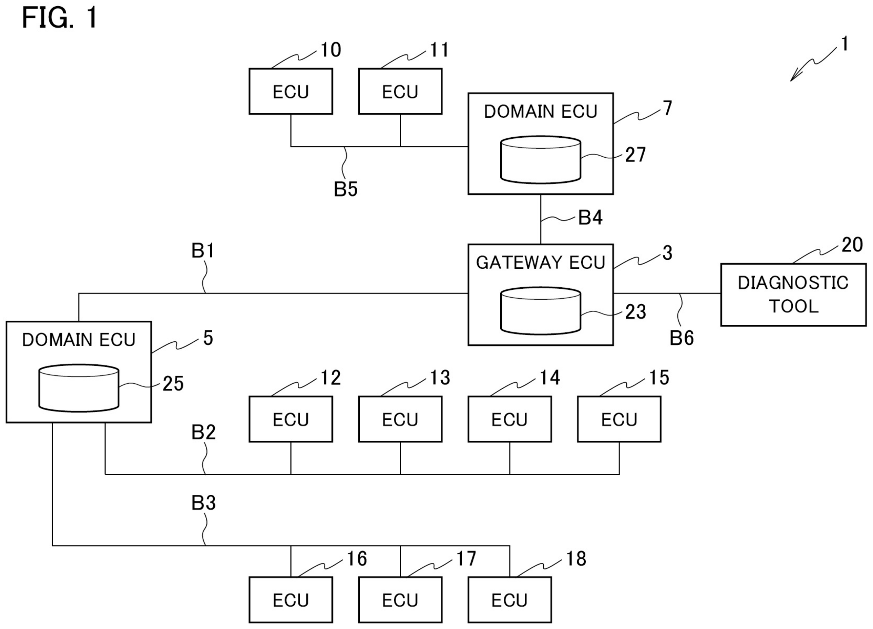

FIG. 1 is a block diagram illustrating a configuration of an in-vehicle control system having an in-vehicle relay device according to the present embodiment. As illustrated in FIG. 1, the in-vehicle control system 1 includes a gateway Electronic Control Unit (ECU) 3, domain ECUs 5 and 7, and a plurality of ECUs which are ECUs 10 to 18, each having a specific function, and they are connected to each other via buses B1 to B6. A diagnostic tool 20 is connected to a diagnostic tool connector disposed in a vehicle.

The gateway ECU 3 is an in-vehicle relay device which is connected to the ECUs 10 to 18 mounted in the vehicle via the buses B1 to B5 and which relays data transmitted to the buses B1 to B5. Further, when the diagnostic tool 20 is connected to the diagnostic tool connector in the vehicle, the gateway ECU 3 is connected to the diagnostic tool 20 via an external connection bus B6, and relays data communication between the diagnostic tool 20 and the ECUs 10 to 18.

The gateway ECU 3 includes a transfer buffer 23. The transfer buffer 23 is a storage for storing pieces of data received from the ECUs 10 to 18, and especially stores a first frame and a response frame of response data.

When this kind of gateway ECU 3 receives a diagnostic request for requesting fault diagnosis from the diagnostic tool 20, the gateway ECU 3 transfers the diagnostic request to the ECUs 10 to 18 which are transmission targets of the diagnostic request. Then, the gateway ECU 3 sets a communication cycle based on the number of the ECUs 10 to 18 and a bus load. When the gateway ECU 3 receives response data to the diagnostic request from the ECUs 10 to 18, the gateway ECU 3 transfers the response data received within a prescribed time to the diagnostic tool 20 for each communication cycle.

Further, the gateway ECU 3 stores the received response data in the transfer buffer 23, acquires the response data received within the prescribed time from the transfer buffer 23, and transfers the response data to the diagnostic tool 20 for each communication cycle.

The domain ECU 5 is an in-vehicle relay device which is connected to the gateway ECU 3 via the bus B1, which is connected to the ECUs 12 to 18 via the buses B2 and B3, and which relays data transmitted between the bus B1, and the buses B2 and B3. Similarly, the domain ECU 7 is an in-vehicle relay device which is connected to the gateway ECU 3 via the bus B4, which is connected to the ECUs 10 and 11 via the bus B5, and which relays data transmitted between the bus B4 and the bus B5.

The domain ECUs 5 and 7 have transfer buffers 25 and 27, respectively. The transfer buffers 25 and 27 are storages for storing pieces of data received from the ECUs 10 to 18, and especially store first frames and response frames of response data.

When this kind of domain ECUs 5 and 7 receive a diagnostic request for requesting fault diagnosis from the diagnostic tool 20 via the gateway ECU 3, the domain ECUs 5 and 7 transfer the diagnostic request to the ECUs 10 to 18 which are transmission targets of the diagnostic request. Then, the domain ECUs 5 and 7 set a communication cycle based on the number of the ECUs 10 to 18 and a bus load. When the domain ECUs 5 and 7 receive response data to the diagnostic request from the ECUs 10 to 18, the domain ECUs 5 and 7 transfer the response data received within a prescribed time to the diagnostic tool 20 for each communication cycle.

Further, the domain ECUs 5 and 7 store the received response data in the transfer buffers 25 and 27, acquire the response data received within the prescribed time from the transfer buffers 25 and 27, and transfer the response data to the diagnostic tool 20 for each communication cycle.

Each of the ECUs 10 to 18 is an electronic controller having a specific function, and is an engine control ECU or the like, for example. The ECUs 10 to 18 are ECUs to be subjected to fault diagnosis by On-Board Diagnostics (OBD), and are transmission targets of the diagnostic request transmitted from the diagnostic tool 20. Therefore, when the ECUs 10 to 18 receive the diagnostic request from the diagnostic tool 20, the ECUs 10 to 18 return response data requested by the diagnostic request. Each of the ECUs 10 to 18 has a transmission ID as identification information, and the identification information is added to the response data, for example.

The diagnostic tool 20 is an external tool for performing fault diagnosis by the OBD, and is a General Scan Tool (GST) or the like, for example. When the diagnostic tool 20 is connected to the diagnostic tool connector disposed in the vehicle at a maintenance shop or dealer, the diagnostic tool 20 performs OBD communication with the ECUs 10 to 18 to be subjected to fault diagnosis, and collects various pieces of data for performing fault diagnosis.

The buses B1 to B6 are communication lines for connecting between the gateway ECU 3, the domain ECUs 5 and 7, the ECUs 10 to 18, and the diagnostic tool 20. A communication protocol is a Controller Area Network (CAN). The bus B1 is a communication line for connecting the gateway ECU 3 and the domain ECU 5. The bus B2 is a communication line for connecting the domain ECU 5 and the ECUs 12 to 15. Further, the bus B3 is a communication line for connecting the domain ECU 5 and the ECUs 16 to 18. The bus B4 is a communication line for connecting the gateway ECU 3 and the domain ECU 7. The bus B5 is a communication line for connecting the domain ECU 7 and the ECUs 10 and 11. The bus B6 is a communication line for connecting the gateway ECU 3 and the diagnostic tool connector, and the diagnostic tool 20 is connected to the diagnostic tool connector.

The gateway ECU 3 and the domain ECUs 5 and 7 are controllers composed of general-purpose electronic circuits that include microcomputers, microprocessors, and CPUs, and peripheral devices such as memories. Computer programs for performing data transfer processing are installed in the gateway ECU 3 and the domain ECUs 5 and 7. Each function of the gateway ECU 3 and the domain ECUs 5 and 7 can be implemented by one or more processing circuits. The processing circuits may include programmed processing devices including, for example, electronic circuits. The processing circuits may also include devices such as application specific integrated circuits (ASICs) or conventional circuit components that are arranged to perform the functions described in the embodiment.

[OBD communication]

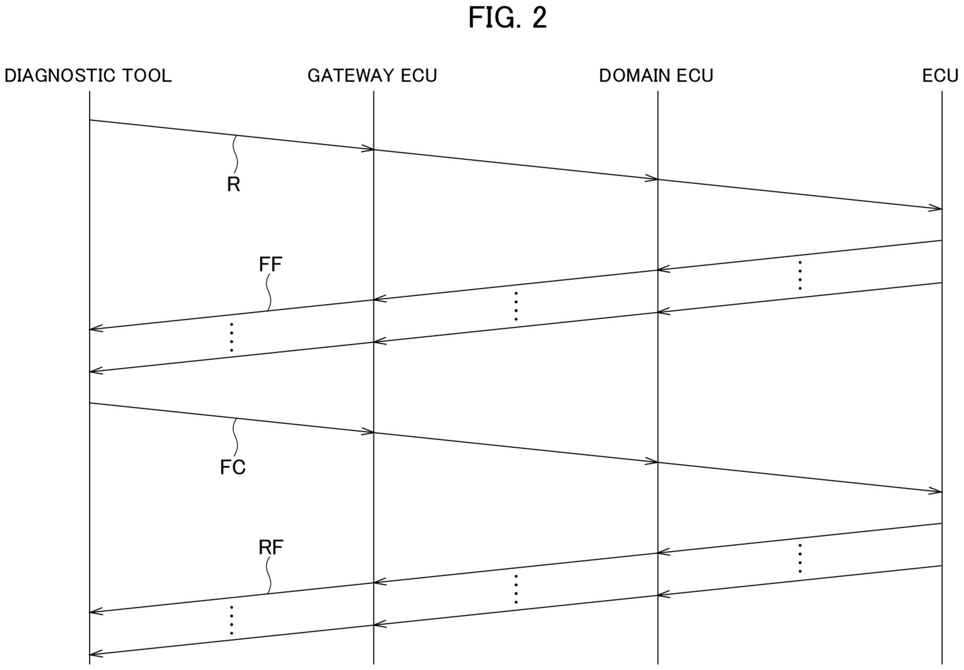

Next, a description will be given regarding the OBD communication when the diagnostic tool 20 is connected to the in-vehicle control system 1 according to the present embodiment. FIG. 2 is a communication sequence diagram of the OBD communication by the diagnostic tool 20.

As illustrated in FIG. 2, when the diagnostic tool 20 transmits a diagnostic request R, the diagnostic request R is transferred by the gateway ECU 3 and the domain ECUs 5 and 7 and then is transmitted to the ECUs 10 to 18.

Each of the ECUs 10 to 18 which has received the diagnostic request R returns a first frame FF which records the size of response data to be returned in response to the diagnostic request R. The returned first frame FF is transferred by the domain ECUs 5 and 7 and the gateway ECU 3, and then is transmitted to the diagnostic tool 20.

The diagnostic tool 20 which has received the first frame FF from each of the ECUs 10 to 18 transmits a flow control frame FC. The flow control frame FC records the number of consecutive transmissions of a response frame, in which the response data returned from the ECUs 10 to 18 is divided, and records communication intervals of the response frame. The transmitted flow control frame FC is transferred by the gateway ECU 3 and the domain ECUs 5 and 7, and then is transmitted to the ECUs 10 to 18.

The ECUs 10 to 18 which have received the flow control frame FC divides the response data into a plurality of response frames RF according to the size of data that can be transmitted in one response frame. Then, the ECUs 10 to 18 return the response frames RF generated through division, by the number of times set as the number of consecutive transmissions, at the communication intervals recorded in the flow control frame FC. The returned response frames RF are transferred by the domain ECUs 5 and 7 and the gateway ECU 3 and then are transmitted to the diagnostic tool 20. In this way, when the response frames RF are returned from the ECUs 10 to 18 individually, the OBD communication by the diagnostic tool 20 ends.

[Mode switching processing]

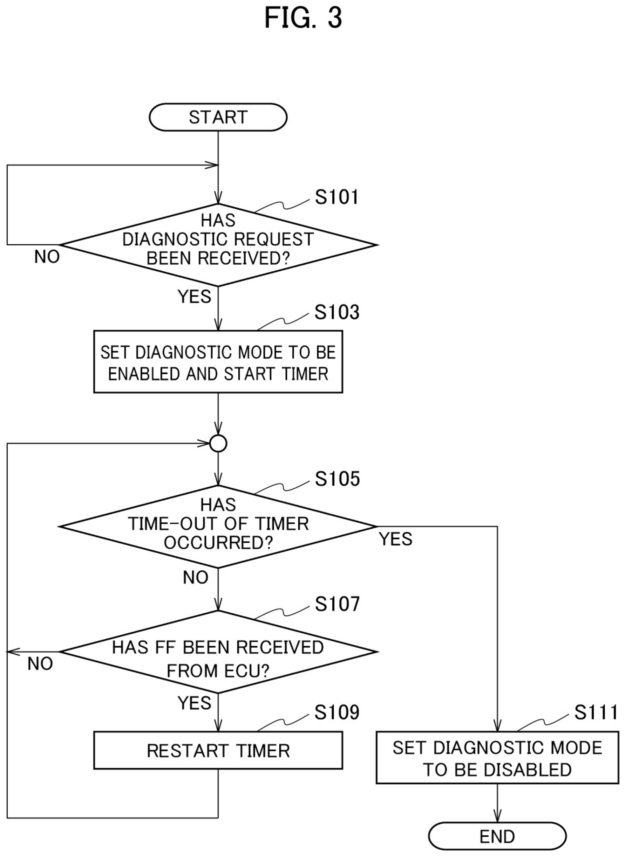

Next, with reference to FIG. 3, mode switching processing performed by the gateway ECU 3 according to the present embodiment will be described. FIG. 3 is a flowchart illustrating a processing procedure of the mode switching processing performed by the gateway ECU 3. Although the gateway ECU 3 performs the mode switching processing in the following description, the domain ECUs 5 and 7 also perform the same processing.

As illustrated in FIG. 3, in step S101, the gateway ECU 3 determines whether the diagnostic request for requesting fault diagnosis has been received from the diagnostic tool 20. If the gateway ECU 3 has received the diagnostic request, the processing proceeds to step S103. Since the diagnostic request has a function address, the diagnostic request is transmitted to the ECUs 10 to 18 to be subjected to fault diagnosis. Meanwhile, if the gateway ECU 3 has not received the diagnostic request, the gateway ECU 3 continuously determines whether the diagnostic request has been received.

When the gateway ECU 3 receives the diagnostic request in step S101, in step S103, the gateway ECU 3 sets a diagnostic mode to be enabled and starts a timer.

In step S105, the gateway ECU 3 determines whether time-out of the timer started in step S103 has occurred. If the time-out has not occurred, the processing proceeds to step S107, and alternatively if the time-out has occurred, the processing proceeds to step S111.

In step S107, the gateway ECU 3 determines whether the first frame FF has been received from the ECUs 10 to 18. The first frame is a frame which records the size of response data to be returned by the ECUs 10 to 18. If the gateway ECU 3 has received the first frame, the processing proceeds to step S109. Alternatively, if the gateway ECU 3 has not received the first frame, the processing returns to step S105.

If the gateway ECU 3 has received the first frame in step S107, in step S109, the gateway ECU 3 restarts the timer, and the processing returns to step S105. This restarts the timer, while the first frame is received. Therefore, the diagnostic mode is continuously set to be enabled.

If the time-out of the timer has occurred in step S105, in step S111, the gateway ECU 3 sets the diagnostic mode to be disabled to end the diagnostic mode, and ends the mode switching processing according to the present embodiment.

[First frame transfer processing]

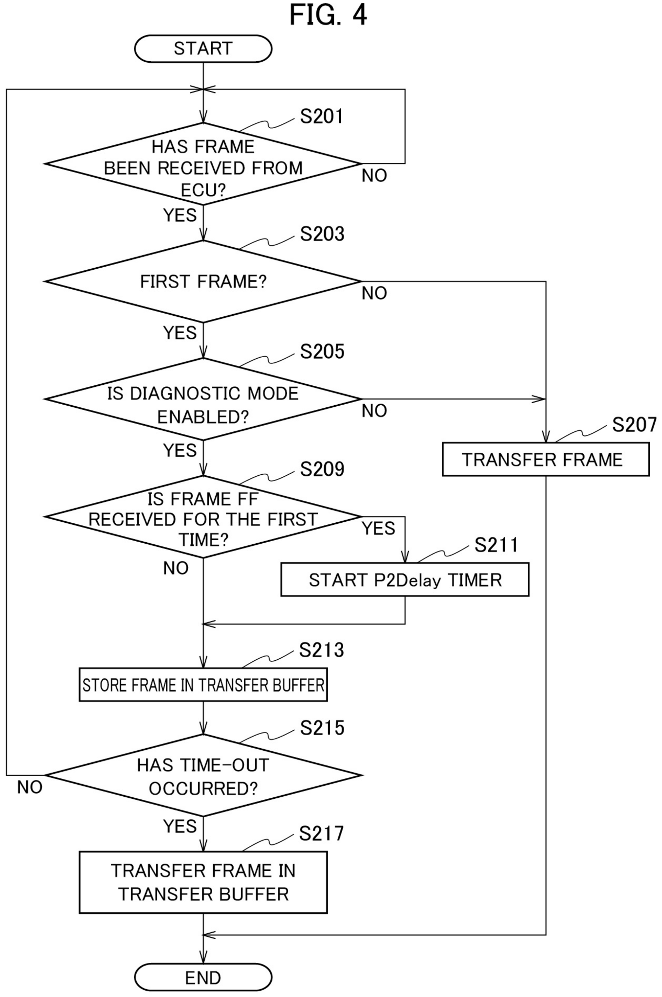

Next, with reference to FIG. 4, the first frame transfer processing performed by the gateway ECU 3 according to the present embodiment will be described. FIG. 4 is a flowchart illustrating a processing procedure of the first frame transfer processing performed by the gateway ECU 3. Although the gateway ECU 3 performs the first frame transfer processing in the following description, the domain ECUs 5 and 7 also perform the same processing.

As illustrated in FIG. 4, in step S201, the gateway ECU 3 determines whether a frame has been received from the ECUs 10 to 18. If the gateway ECU 3 has received the frame, the processing proceeds to step S203. Alternatively, if the gateway ECU 3 has not received the frame, the gateway ECU 3 continuously determines whether the frame has been received.

In step S203, the gateway ECU 3 determines whether the frame received in step S201 is the first frame. If the frame is the first frame, the processing proceeds to step S205. Alternatively, if the frame is not the first frame, the processing proceeds to step S207.

In step S205, the gateway ECU 3 determines whether the diagnostic mode is set to be enabled in the mode switching processing described with reference to FIG. 3. If the diagnostic mode is enabled, the processing proceeds to step S209, and alternatively if the diagnostic mode is not enabled, the processing proceeds to step S207.

In step S207, the gateway ECU 3 determines that the frame received in step S201 is not a frame for fault diagnosis. Then, the gateway ECU 3 transfers the frame received in step S201 to a transmission destination recorded in the frame, and then ends the first frame transfer processing according to the present embodiment.

In step S209, the gateway ECU 3 determines whether the frame received in step S201 is a first frame which is received for the first time after receiving the diagnostic request. If the frame is the first frame received for the first time, the processing proceeds to step S211, and alternatively if the frame is not the first frame received for the first time, the processing proceeds to step S213.

In step S211, the gateway ECU 3 starts a P2Delay timer. The time-out period started here is a waiting time for the gateway ECU 3 to receive the first frame transmitted from the ECUs 10 to 18.

In step S213, the gateway ECU 3 stores the first frame received in step S201 in the transfer buffer 23. The transfer buffer 23 sequentially stores first frames received within the time-out period.

In step S215, the gateway ECU 3 determines whether time-out of the P2Delay timer started in step S211 has occurred. If the time-out has occurred, the processing proceeds to step S217, and alternatively if the time-out has not occurred, the processing returns to step S201.

In step S217, the gateway ECU 3 transfers, to the diagnostic tool 20, the first frames stored in the transfer buffer 23 in the order in which the first frames have been received, and ends the first frame transfer processing according to the present embodiment.

By storing all the first frames received within the time-out period in the transfer buffer 23 once, and then transferring the first frames in this way, transfer omission of the first frames can be prevented. Suppose that the first frames are transferred in the order in which the first frames have been received without storing the first frames in the transfer buffer 23. In the above case, if it takes time to transfer a first frame received first, time-out of a first frame received later occurs, and the first frame may not be transferred, for example. Therefore, by storing the received first frames once in the transfer buffer 23, all the first frames transmitted within the time-out period can be received and transferred. This can prevent the transfer omission of the first frames.

[Response frame transfer processing]

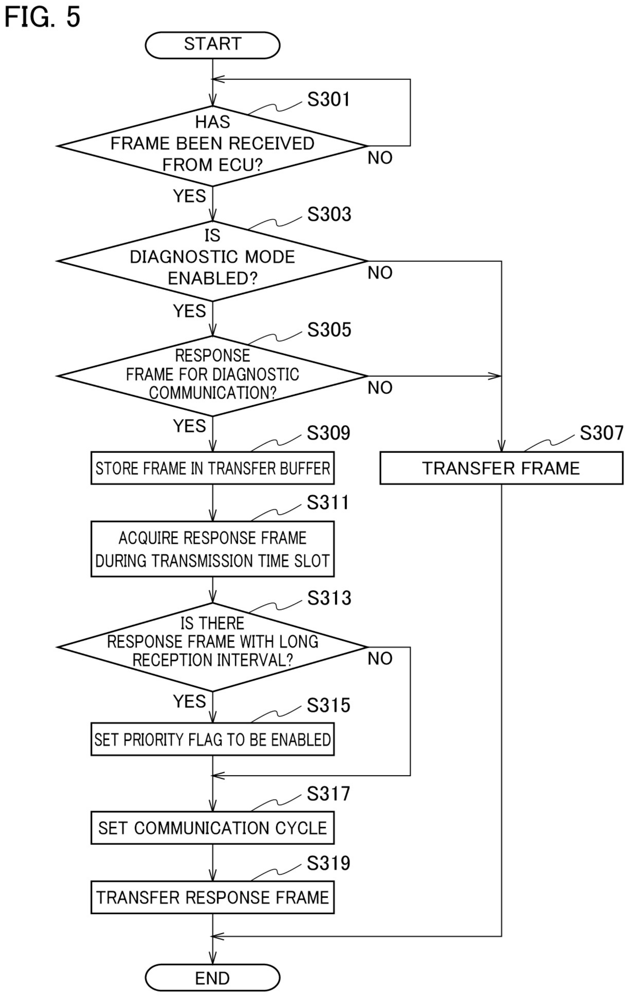

Next, with reference to FIG. 5, response frame transfer processing performed by the domain ECU 5 according to the present embodiment will be described. FIG. 5 is a flowchart illustrating a processing procedure of the response frame transfer processing performed by the domain ECU 5. Although the domain ECU 5 performs the response frame transfer processing in the following description, the gateway ECU 3 and the domain ECU 7 also perform the same processing.

As illustrated in FIG. 5, in step S301, the domain ECU 5 determines whether a frame has been received from the ECUs 12 to 18, and if the domain ECU 5 has received the frame, the processing proceeds to step S303. Alternatively, if the domain ECU 5 has not received the frame, the domain ECU 5 continuously determines whether the frame has been received.

In step S303, the domain ECU 5 determines whether the diagnostic mode is set to be enabled in the mode switching processing described with reference to FIG. 3. If the diagnostic mode is enabled, the processing proceeds to step S305, and alternatively if the diagnostic mode is not enabled, the processing proceeds to step S307.

In step S305, the domain ECU 5 determines whether the frame received in step S301 is a response frame for diagnostic communication. The response frame is a frame in which, the response data returned from the ECUs 12 to 18 in response to the diagnostic request, is divided according to the size of data that can be transmitted in one response frame. If the domain ECU 5 determines that the frame is the response frame, the processing proceeds to step S309. Alternatively, if the domain ECU 5 determines that the frame is not the response frame, the processing proceeds to step S307.

In step S307, the domain ECU 5 determines that the frame received in step S301 is not a frame for fault diagnosis. Then, the domain ECU 5 transfers the frame received in step S301 to a transmission destination recorded in the frame, and ends the response frame transfer processing according to the present embodiment.

In step S309, the domain ECU 5 stores the response frame received in step S301 in the transfer buffer 25.

In step S311, the domain ECU 5 acquires, from the transfer buffer 25, response frames received during a transmission time slot which is a prescribed time. The transmission time slot is a communication time interval allocated to the domain ECU 5. The domain ECU 5 may store the acquired response frames in a temporary storage area to distinguish the acquired response frames from other frames.

In step S313, the domain ECU 5 determines whether the response frames acquired in step S311 include a response frame with a long reception interval. Specifically, the domain ECU 5 determines whether the acquired response frames include a response frame in which a reception interval between the previous reception and the current reception is longer than the transmission time slot which is the prescribed time. At this time, the domain ECU 5 confirms whether a response frame received last time and a response frame received this time are transmitted from the same ECU using identification information such as a transmission ID added to a response frame.

For a first response frame after a flow control frame is transmitted, determination is made based on whether a time interval from when the flow control frame is transmitted to when the first response frame is received is longer than the transmission time slot. Then, if there is a response frame with a long reception interval, the processing proceeds to step S315, and alternatively if there is no response frame with a long reception interval, the processing proceeds to step S317.

In step S315, the domain ECU 5 sets a priority flag of, the response frame of which the reception interval is determined to be long in step S313, to be enabled. Meanwhile, priority flags of other response frames of which reception intervals are not determined to be long are kept as disabled without any changes. The response frame in which the priority flag is set to be enabled and the response frames in which the priority flags are set to be disabled may be stored in different storage areas in the transfer buffer 25.

In step S317, the domain ECU 5 sets a communication cycle T when a response frame is transferred to to the diagnostic tool 20. The communication cycle T is set based on the number of ECUs which are transmission targets of the diagnostic requests and the bus load. Specifically, the domain ECU 5 calculates the communication cycle T using the following formula 1.

[Formula 1]

$$\text{Communication cycle } T = \text{total frame time} * 100\%/(100\% - \text{bus load}) \ldots (1)$$

The total frame time in formula 1 is calculated using the following formulas 2 and 3.

[Formula 2]

$$\text{Total frame time} = \text{the number of ECUs} * \text{frame time} \ldots (2)$$

[Formula 3]

$$\text{Frame time} = \text{the number of bits in frame} * 1/\text{communication speed [bps]} \ldots (3)$$

In this way, the communication cycle T is set based on the number of ECUs which are transmission targets of the diagnostic requests and the bus load. Therefore, even if the communication line load does not actually increase, a communication cycle can be set based on the expectation that the communication line load will increase. Further, as shown in formulas 1 and 2, the communication cycle T is set longer, as the bus load increases, and the communication cycle T is set longer, as the number of ECUs increases. When a plurality of buses are connected, the domain ECU 5 sets a communication cycle T for each bus.

Here, the number of bits in a frame in formula 3 is a preset value, and the communication speed is also a value specified by a protocol. In FIG. 1, the number of ECUs is nine, which is the ECUs 10 to 18. Further, the bus load may have a value estimated by experiments or simulations, and may be set to 55%, for example.

As a method of estimating the bus load, the average bus load may be calculated for each bus, and the maximum bus load may be used as the bus load in formula 1. The average bus load may be obtained as the sum of frame times defined in a frame definition document. Further, the bus load existing in communication paths between the diagnostic tool 20 and the ECUs 10 to 18 may be monitored, and the maximum bus load may be used as the bus load in formula 1. Still further, the bus load existing in the communication paths between the diagnostic tool 20 and the ECUs 10 to 18 may be uploaded to a server, statistical analysis may be performed, and the maximum bus load may be used as the bus load in formula 1.

In step S319, the domain ECU 5 transfers, the response frame which is received during the transmission time slot and which is acquired by the domain ECU 5 in step S311, to the diagnostic tool 20 for each communication cycle set in step S317.

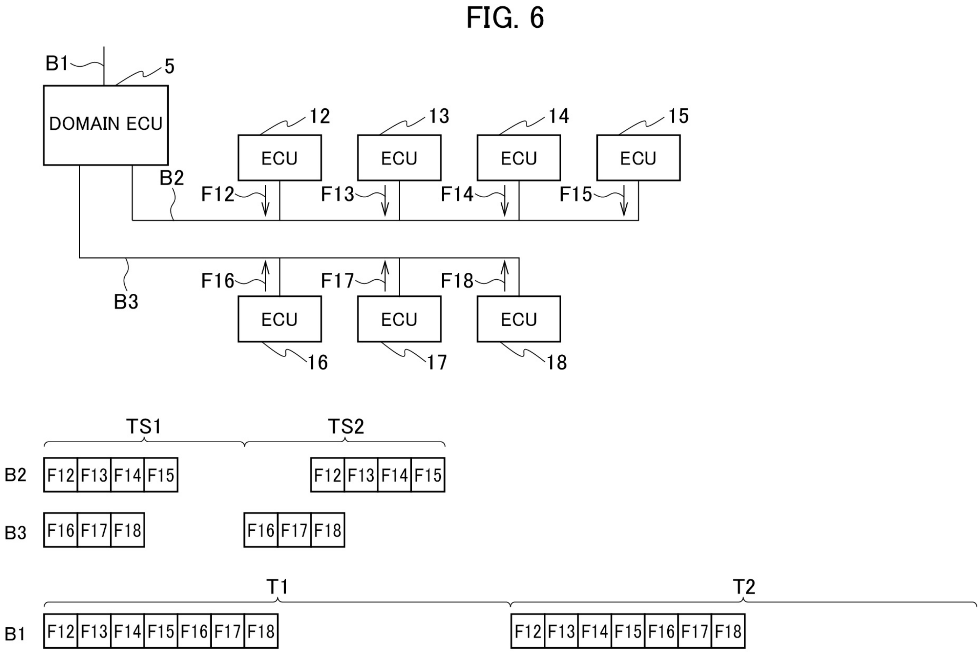

With reference to FIG. 6, a case where the domain ECU 5 transfers response frames received from the buses B2 and B3 will be described, for example. As illustrated in FIG. 6, the domain ECU 5 receives response frames F12 to F18 transmitted from the ECUs 12 to 18, respectively and stores them in the transfer buffer 25 within a transmission time slot TS1. Then, the domain ECU 5 collectively transfers, to the bus B1, the response frames F12 to F18 stored in the transfer buffer 25 within the transmission time slot TS1 at a communication cycle T1. This enables the domain ECU 5 to transfer the response frames F12 to F18 received within a transmission time slot TS to the diagnostic tool 20 for each communication cycle T.

Further, when transferring the response frames F12 to F18, the domain ECU 5 transfers the response frames in the order in which the response frames are received in the bus. As illustrated in FIG. 6, the bus B2 receives the response frames F12, F13, F14, and F15 in this order, for example. Therefore, the domain ECU 5 transfers the response frames F12 to F15 to the bus B1 in this order. Similarly, the bus B3 receives the response frames F16, F17, and F18 in this order. Therefore, the domain ECU 5 transfers the response frames F16 to F18 to the bus B1 in this order. The domain ECU 5 is set to transfer the response frames of the bus B2 first and the response frames of the bus B3 later.

Further, if the response frames acquired in step S311 include a response frame in which the priority flag is set to be enabled in step S315, the domain ECU 5 preferentially transfers the response frame in which the priority flag is set to be enabled. That is, among received response frames, a response frames in which a reception interval between the previous reception and the current reception is longer than the transmission time slot, is preferentially transferred to the diagnostic tool 20.

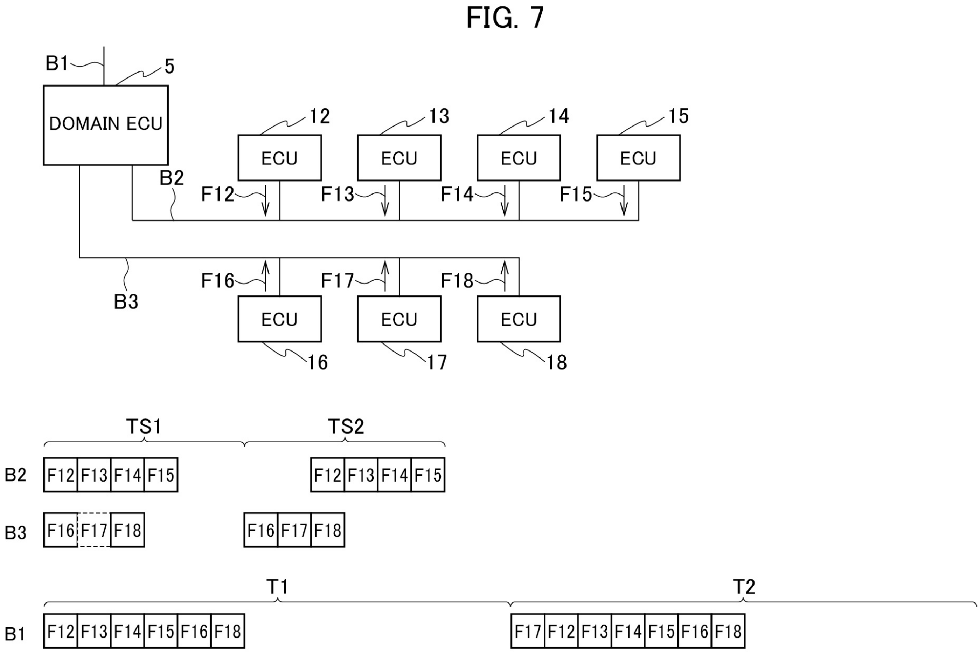

As illustrated in FIG. 7, during the transmission time slot TS1, response frames are transmitted from ECUs other than the ECU 17, but the response frame F17 is not transmitted from the ECU 17, for example. During a transmission time slot TS2, the response frames F12 to F18 are transmitted from all of the ECUs 12 to 18. Therefore, in the response frame F17 during the transmission time slot TS2, a reception interval between the previous reception and the current reception is longer than the transmission time slot. Therefore, the domain ECU 5 preferentially transfers this kind of response frame in which the reception interval is long. As illustrated in FIG. 7, the domain ECU 5 transfers the response frame F17 in which a reception interval is long at the beginning of frames at the communication cycle T2, for example.

When response frames stored in the transfer buffer 25 are transferred in this way, the response frame transfer processing according to the present embodiment ends. This enables the domain ECU 5 to transfer the response frames received from the ECUs 12 to 18 to the diagnostic tool 20 for each communication cycle T.

[Effect of embodiment]

As described above in detail, when the in-vehicle relay device according to the present embodiment receives diagnostic requests from the diagnostic tool 20 connected to a vehicle, the in-vehicle relay device transfers the diagnostic requests to the ECUs 10 to 18 which are transmission targets of the diagnostic requests. Then, the in-vehicle relay device sets the communication cycle based on the number of ECUs and the bus load. When the in-vehicle relay device receives response data to the diagnostic requests from the ECUs 10 to 18, the in-vehicle relay device transfers the response data received within a prescribed time to the diagnostic tool 20 for each communication cycle.

Conventionally, a transmission interval has been determined according to the degree of congestion of a communication line. Therefore, it has been able to reduce a communication line load only after the communication line is actually congested. However, the in-vehicle relay device according to the present embodiment sets the communication cycle based on the number of ECUs and the bus load. Therefore, even if the communication line load does not actually increase, the communication cycle can be set based on the expectation that the communication line load will increase.

Therefore, the in-vehicle relay device according to the present embodiment can prevent the communication line load from increasing in advance by expecting that the communication line load will increase.

In addition, the in-vehicle relay device according to the present embodiment stores received response data in a transfer buffer, acquires the response data received within a prescribed time from the transfer buffer, and transfers the response data to the diagnostic tool 20 for each communication cycle. As a result, the response data stored in the transfer buffer can be acquired and transferred at an appropriate timing. This can prevent an increase in the communication line load in advance.

Further, the in-vehicle relay device according to the present embodiment sets the communication cycle to be longer, as the communication line load increases. As a result, the communication cycle can be set to be longer, when an increase in the communication line load is estimated. This can prevent an increase in the communication line load in advance.

Further, the in-vehicle relay device according to the present embodiment sets the communication cycle to be longer, as the number of the ECUs 10 to 18 increases. As a result, the communication cycle can be set to be longer, when the number of ECUs increases and an increase in the communication line load is expected. This can prevent an increase in the communication line load in advance.

Further, identification information is set to each of the ECUs 10 to 18 connected to the in-vehicle relay device according to the present embodiment, and identification information is added to response data. This enables the recognition of an ECU that has transmitted the response data. Therefore, the response data can be transferred accurately.

In addition, the in-vehicle relay device according to the present embodiment preferentially transfers, to the diagnostic tool 20, response data in which a reception interval between the previous reception and the current reception is longer than a prescribed time, among pieces of received response data. As a result, response data which is omitted from being transferred can be preferentially transferred. This can enhance the communication reliability.

In addition, when a plurality of communication lines are connected, the in-vehicle relay device according to the present embodiment sets a communication cycle for each communication line. As a result, an optimum communication cycle can be set for each communication line. This can efficiently prevent an increase in the communication line load.

The above described embodiment is an example of the present invention. Therefore, the present invention is not limited to the above described embodiment, and it is needless to say that various modifications can be made in accordance with the design or the like even in other embodiments other than the above described embodiment, as long as there is no deviation from the technical idea of the present invention.

REFERENCE SIGNS LIST

1 In-vehicle control system
3 Gateway ECU
5, 7 Domain ECU
10 to 18 ECU
B1 to B6 Bus
20 Diagnostic tool
23, 25, 27 Transfer buffer

**Claims**

1. A data transfer method of an in-vehicle relay device that is connected to a plurality of electronic controllers mounted on a vehicle via a communication line and is configured to relay data transmitted to the communication line, the data transfer method comprising: by the in-vehicle relay device,

   upon receiving a specific request from an external tool connected to the vehicle, transferring the specific request to the plurality of electronic controllers that are transmission targets of the specific request;
   setting a communication cycle based on a number of the plurality of electronic controllers and a load of the communication line; and
   upon receiving response data to the specific request from the plurality of electronic controllers, transferring the response data received within a prescribed time to the external tool for each communication cycle.

2. The data transfer method according to claim 1, comprising, by the in-vehicle relay device, storing the received response data in a storage, acquiring the received response data within the prescribed time from the storage, and transferring the acquired received response data to the external tool for each communication cycle.

3. The data transfer method according to claim 1 or 2, comprising, by the in-vehicle relay device, setting the communication cycle to be longer as the load of the communication line increases.

4. The data transfer method according to claim 1 or 2, comprising, by the in-vehicle relay device, setting the communication cycle to be longer as the number of the plurality of electronic controllers increases.

5. The data transfer method according to claim 1 or 2, wherein identification information is set to each of the plurality of electronic controllers, and the identification information is added to the response data.

6. The data transfer method according to claim 1 or 2, comprising, by the in-vehicle relay device, preferentially transferring, to the external tool, response data of the received response data in which a reception interval between a previous reception and a current reception is longer than the prescribed time.

7. The data transfer method according to claim 1 or 2, comprising, upon the communication line being provided in plurality and the communication lines being connected to the in-vehicle relay device, setting the communication cycle for each of the communication lines by the in-vehicle relay device.

8. An in-vehicle relay device comprising a controller that is connected to a plurality of electronic controllers mounted on a vehicle via a communication line and is configured to relay data transmitted to the communication line,
wherein the controller is configured to:

upon receiving a specific request from an external tool connected to the vehicle, transfer the specific request to the plurality of electronic controllers that are transmission targets of the specific request;
set a communication cycle based on a number of the plurality of electronic controllers and a load of the communication line; and
upon receiving response data to the specific request from the plurality of electronic controllers, transfer the response data received within a prescribed time to the external tool for each communication cycle.

FIG. 1

# FIG. 2

DIAGNOSTIC TOOL        GATEWAY ECU        DOMAIN ECU        ECU

R

FF

FC

RF

EP 4 645 817 A1

# FIG. 3

START

S101
HAS DIAGNOSTIC REQUEST BEEN RECEIVED?

NO

YES

S103
SET DIAGNOSTIC MODE TO BE ENABLED AND START TIMER

S105
HAS TIME-OUT OF TIMER OCCURRED?

YES

NO

S107
HAS FF BEEN RECEIVED FROM ECU?

NO

YES

S109
RESTART TIMER

S111
SET DIAGNOSTIC MODE TO BE DISABLED

END

# FIG. 4

START

S201 — HAS FRAME BEEN RECEIVED FROM ECU? — NO / YES

S203 — FIRST FRAME? — NO / YES

S205 — IS DIAGNOSTIC MODE ENABLED? — NO / YES

S207 — TRANSFER FRAME

S209 — IS FRAME FF RECEIVED FOR THE FIRST TIME? — YES / NO

S211 — START P2Delay TIMER

S213 — STORE FRAME IN TRANSFER BUFFER

S215 — HAS TIME-OUT OCCURRED? — NO / YES

S217 — TRANSFER FRAME IN TRANSFER BUFFER

END

FIG. 5

```
                    ┌─────────────┐
                    │    START    │
                    └─────────────┘
                           │
                           ▼                    S301
                    ╱───────────────╲
                   ╱       HAS        ╲   NO
                  ╱  FRAME BEEN RECEIVED ╲──────┐
                  ╲   FROM ECU?         ╱        │
                   ╲─────────────────╱          │
                           │ YES                 │
                           ▼            S303      │
                    ╱───────────────╲            │
                   ╱       IS         ╲  NO        │
                  ╱  DIAGNOSTIC MODE    ╲──────────────────────┐
                  ╲    ENABLED?        ╱                        │
                   ╲─────────────────╱                         │
                           │ YES                               │
                           ▼            S305                    │
                    ╱───────────────╲                          │
                   ╱    RESPONSE      ╲  NO                     │
                  ╱ FRAME FOR DIAGNOSTIC╲──────────────────────┤
                  ╲  COMMUNICATION?    ╱                        │
                   ╲─────────────────╱                         │
                           │ YES                               │
                           ▼   S309                   S307      │
              ┌──────────────────────────┐   ┌──────────────────┐
              │ STORE FRAME IN TRANSFER   │   │  TRANSFER FRAME  │
              │         BUFFER            │   └──────────────────┘
              └──────────────────────────┘            │
                           │   S311                    │
              ┌──────────────────────────┐             │
              │  ACQUIRE RESPONSE FRAME   │             │
              │ DURING TRANSMISSION TIME  │             │
              │          SLOT             │             │
              └──────────────────────────┘             │
                           │   S313                     │
                    ╱───────────────╲                   │
                   ╱    IS THERE      ╲  NO              │
                  ╱ RESPONSE FRAME WITH ╲────┐           │
                  ╲  LONG RECEPTION     ╱     │          │
                   ╲   INTERVAL?      ╱       │          │
                    ╲───────────────╱        │          │
                           │ YES    S315      │          │
              ┌──────────────────────────┐    │          │
              │ SET PRIORITY FLAG TO BE   │    │          │
              │        ENABLED            │    │          │
              └──────────────────────────┘    │          │
                           │◄─────────────────┘          │
                           ▼   S317                       │
              ┌──────────────────────────┐               │
              │  SET COMMUNICATION CYCLE  │               │
              └──────────────────────────┘               │
                           │   S319                       │
              ┌──────────────────────────┐               │
              │  TRANSFER RESPONSE FRAME  │               │
              └──────────────────────────┘               │
                           │◄──────────────────────────── ┘
                           ▼
                    ┌─────────────┐
                    │     END     │
                    └─────────────┘
```

FIG. 6

EP 4 645 817 A1

FIG. 7

## INTERNATIONAL SEARCH REPORT

| International application No. |
| --- |
| **PCT/JP2022/048429** |

**A. CLASSIFICATION OF SUBJECT MATTER**

*H04L 47/28*(2022.01)i; *H04L 12/28*(2006.01)i
FI: H04L47/28; H04L12/28 100A; H04L12/28 200Z

According to International Patent Classification (IPC) or to both national classification and IPC

**B. FIELDS SEARCHED**

Minimum documentation searched (classification system followed by classification symbols)

H04L47/28; H04L12/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-000597 A (HONDA MOTOR CO., LTD.) 05 January 2015 (2015-01-05) paragraphs [0032]-[0038], [0062]-[0097] | 1-8 |
| A | JP 2015-080045 A (DENSO CORPORATION) 23 April 2015 (2015-04-23) paragraphs [0013]-[0041] | 1-8 |
| A | JP 2020-022019 A (HITACHI AUTOMOTIVE SYSTEMS, LTD.) 06 February 2020 (2020-02-06) paragraphs [0010]-[0043] | 1-8 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 March 2023** | **20 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/048429**

| Patent document cited in search report | | | Publication date (day/month/year) | Patent family member(s) | Publication date (day/month/year) |
|---|---|---|---|---|---|
| JP | 2015-000597 | A | 05 January 2015 | (Family: none) | |
| JP | 2015-080045 | A | 23 April 2015 | DE  102014220701  A1 paragraphs [0024]-[0052] | |
| JP | 2020-022019 | A | 06 February 2020 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005047488 A